(19) Europäisches Patentamt / European Patent Office / Office européen des brevets

(11) **EP 4 787 335 A1**

(12) **EUROPEAN PATENT APPLICATION**

(43) Date of publication:
**05.08.2026 Bulletin 2026/32**

(21) Application number: **25222887.9**

(22) Date of filing: **12.12.2025**

(51) International Patent Classification (IPC):
**G06V 10/82** $^{(2022.01)}$   **G06V 40/16** $^{(2022.01)}$

(52) Cooperative Patent Classification (CPC):
**G06V 10/82; G06V 40/176**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.01.2025 IN 202521007834**

(71) Applicant: **Tata Consultancy Services Limited Maharashtra (IN)**

(72) Inventors:
• **SINHA, Sanjana**
  **400601 Mumbai, Maharashtra (IN)**
• **TIWARI, Lokender**
  **110001 New Delhi, Delhi (IN)**
• **BHOWMICK, Brojeshwar**
  **700135 Kolkata, West Bengal (IN)**
• **CHANDA, Sushovan**
  **411028 Pune, Maharashtra (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR GENERATING EMOTIONAL TALKING HEAD VIDEO USING DISENTANGLED POSE AND EXPRESSION FLOW GUIDANCE**

(57)    This disclosure relates generally to method and system for generating emotional talking head video using disentangled pose and expression-flow guidance. Generating realistic one-shot emotional talking head animation on arbitrary faces is a challenging problem, as it requires realistic emotions, head movements, identity preservation, and accurate lip sync. The method receives a plurality of inputs comprising an identity image, a speech audio input data and an emotion input data to generate emotional talking head video. Further, the plurality of inputs are utilized to generate one or more pose landmarks using the pose generation network, and one or more pose landmarks are generated using the expression generation network. Finally, an image generation network generates emotional talking head video using disentangled optical flow computation for pose-guided and expression-guided motion using one or more expression-invariant pose landmarks and pose-invariant emotion landmarks. Additionally, the method generates accurate facial emotions and emotion accuracy on benchmark datasets.

FIG.2

EP 4 787 335 A1

**Description**

CROSS-REFERENCE TO RELATED APPLICATIONS AND PRIORITY

The present application claims priority from Indian application no. 202521007834, filed on January 30, 2025.

TECHNICAL FIELD

The disclosure herein generally relates to emotional talking head video, and, more particularly, to method and system for generating emotional talking head using disentangled pose and expression flow guidance.

BACKGROUND

Recently, there has been increasing attention on synthesizing realistic talking heads due to their wide-ranging applications in industry, such as digital human animation, visual dubbing, and video content creation. Audio-driven talking-head generation aims to produce realistic talking-head videos synchronized with speech. However, unlike speech, humans convey intentions through emotional expressions. Therefore, generating emotional talking heads is important to improve the fidelity of talking heads for real-world applications.

Existing emotional talking face generation methods either fail to retain the identity information of arbitrary subjects owing to the limited variability of existing emotional datasets, or they fail to capture emotions accurately even if they preserve identity of arbitrary faces. Moreover, most of the methods rely on additional input videos for driving poses and/or expressions on the generated video. For practical applications, it is infeasible to obtain driving videos of the same or different subject with variations in head pose, expressions and the like.

Moreover, existing talking head generation methods often require driving pose and additional expression source videos to generate talking heads, which makes them infeasible for practical applications. Generating realistic head movements from speech is an ill-posed problem as there is no one-to-one mapping between speech and head movements, which makes the methods resort to driving videos or identity specific pose styles based on a few training identities as pose sources. However, there is a relation between emotion and head movements (e.g happy or angry emotions are accompanied by larger head movements than neutral or sad) which has not been explored in previous methods generating head movements.

SUMMARY

Embodiments of the present disclosure present technological improvements as solutions to one or more of the above-mentioned technical problems recognized by the inventors in conventional systems. For example, in one embodiment, a system for generating emotional talking head using disentangled pose and expression flow guidance is provided. The system includes receiving a plurality of inputs comprising an identity image, a speech audio input data and an emotion input data. Further, a pose generation network based on conditional VAE-LSTM generates a sequence of emotion-controllable diverse head pose movements using one or more pose landmarks in neutral expression for the plurality of inputs. The pose generation network comprises a first audio encoder, a first emotion encoder, a pose encoder, a reference pose encoder, an LSTM encoder and a LSTM decoder.

The expression generation network based on graph convolution generates one or more expression landmarks in fixed frontal pose for the plurality of inputs. The expression generation network comprises a second audio encoder, an second emotion encoder, a face graph encoder, a face graph decoder; and a mouth graph encoder. Then, an image generation network for the identity image generates an emotional talking head video using disentangled optical flow computation for pose-guided and expression-guided motion using the one or more expression-invariant pose landmarks and pose-invariant emotion landmarks. The image generation network comprises of a disentangled expression flow branch and a pose flow branch. The disentangled expression flow branch processes the one or more expression landmarks and the pose flow branch processes the one or more pose landmarks. The expression flow branch includes a first transformation block, an expression driven motion generation block and an expression low guided image inpainting block. The pose flow branch includes a second transformation block, a pose-driven motion generation block and a pose flow guided image inpainting block.

In another aspect, a method for generating emotional talking head using disentangled pose and expression flow guidance is provided. The method includes receiving a plurality of inputs comprising an identity image, a speech audio input data and an emotion input data. Further, a pose generation network based on conditional VAE-LSTM generates a sequence of emotion-controllable diverse head pose movements using one or more pose landmarks in neutral expression for the plurality of inputs. The pose generation network comprises a first audio encoder, a first emotion encoder, a pose encoder, a reference pose encoder, an LSTM encoder and a LSTM decoder.

The expression generation network based on graph convolution generates one or more expression landmarks in fixed frontal pose for the plurality of inputs. The expression generation network comprises a second audio encoder, an second emotion encoder, a face graph encoder, a face graph decoder; and a mouth graph encoder. Then, an image generation network for the identity image generates an emotional talking head video using disentangled optical flow computation for pose-guided and expression-guided motion using the one or more expression-invariant pose landmarks and pose-invariant emotion landmarks. The image generation network comprises of a disentangled expression flow branch and a pose flow branch. The disentangled expression flow branch processes the one or more expression landmarks and the pose flow branch processes the one or more pose landmarks. The expression flow branch includes a first transformation block, an expression driven motion generation block and an expression low guided image inpainting block. The pose flow branch includes a second transformation block, a pose-driven motion generation block and a pose flow guided image inpainting block.

In yet another aspect, there are provided one or more non-transitory machine-readable information storage mediums comprising one or more instructions which when executed by one or more hardware processors cause: receiving a plurality of inputs comprising an identity image, a speech audio input data and an emotion input data. Further, a pose generation network based on conditional VAE-LSTM generates a sequence of emotion-controllable diverse head pose movements using one or more pose landmarks in neutral expression for the plurality of inputs. The pose generation network comprises a first audio encoder, an first emotion encoder, a pose encoder, a reference pose encoder, an LSTM encoder and a LSTM decoder.

The expression generation network based on graph convolution generates one or more expression landmarks in fixed frontal pose for the plurality of inputs. The expression generation network comprises a second audio encoder, an second emotion encoder, a face graph encoder, a face graph decoder; and a mouth graph encoder. Then, an image generation network for the identity image generates an emotional talking head video using disentangled optical flow computation for pose-guided and expression-guided motion using the one or more expression-invariant pose landmarks and pose-invariant emotion landmarks. The image generation network comprises of a disentangled expression flow branch and a pose flow branch. The disentangled expression flow branch processes the one or more expression landmarks and the pose flow branch processes the one or more pose landmarks. The expression flow branch includes a first transformation block, an expression driven motion generation block and an expression low guided image inpainting block. The pose flow branch includes a second transformation block, a pose-driven motion generation block and a pose flow guided image inpainting block.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG.1 illustrates an exemplary system to generate emotional talking head video according to some embodiments of the present disclosure.

FIG.2 illustrates an architecture overview of the system 100 to generate emotional talking head video using the system of FIG.1, in accordance with some embodiments of the present disclosure.

FIG.3 is a flow diagram illustrating a method to generate emotional talking head video using the system of FIG.2, in accordance with some embodiments of the present disclosure.

FIG.4 illustrates a pose generation network to generate one or more pose landmarks for the identity image using the system of FIG.1, in accordance with some embodiments of the present disclosure.

FIG.5 illustrates a image generation network to generate emotional talking head video using the system of FIG. 1, in accordance with some embodiments of the present disclosure.

FIG.6A and FIG.6B illustrates quantitative results of the present disclosure on magazine of early American dataset (MEAD) dataset and crowd-sourced emotional multimodal actor dataset (CREMA-D) dataset in comparison to the state-of-the-art (SOTA) methods for emotional talking head video.

FIG.7 illustrates one-shot talking head generation method synthesized different emotions and head movements on arbitrary faces.

FIG.8 illustrates qualitative comparison with emotional talking head methods synthesizing head movements on an arbitrary face.

FIG.9 illustrates qualitative results for ablation study on an random face outside existing datasets.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

**GLOSSARY:**

In the context of the present disclosure, the term "emotional talking head" refers to a machine generated video of an animated talking human face with emotional expressions.

The term "disentangled pose and expression flow guidance" refers to disjoint computation of expression-guided and pose-guided optical flow.

The term "pose landmarks" refers to facial landmark points depicting a neutral facial expression and arbitrary head pose.

The term "expression landmarks" refers to facial landmark points depicting a frontal head pose and arbitrary facial expressions.

The term "conditional variational autoencoder" incorporates a conditional variable, for example an audio feature, an emotion feature, and a reference pose features into encoder and decoder networks.

Audio-driven talking human head synthesis is important for enhanced user experience in a variety of commercial applications such as audio-visual digital assistant for Ecommerce platforms, virtual instructor for online education etc. Audio-driven facial animation methods animate a target face from a single image (one-shot generation) or edit the mouth movements from a video (video-based generation). Synthesizing realistic human emotions is crucial for expressive human-computer interaction in commercial applications. However, existing one-shot audio-driven techniques are mostly limited in their emotion accuracy while maintaining generalization ability. This can be mainly attributed to the limitation of emotion-annotated talking head training datasets which are captured in controlled indoor setup with fixed background, illumination, low variety in head poses, and a limited number of subjects. Existing methods trained on these datasets exhibit poor generalization to arbitrary faces and backgrounds and contain static heads. On the other hand, one-shot talking head generation methods that are emotion-agnostic (i.e., do not generate talking videos in different emotions) are trained on large-scale known in the art datasets such as VoxCeleb, high definition talking face dataset (HDTF) containing a large variety of identities, poses, backgrounds, hence it is easier for these methods to generalize to unseen faces and head.

The present disclosure herein provides method and system for generating emotional talking head using disentangled pose and expression flow guidance. Generating realistic one-shot emotional talking head animation on arbitrary faces is a challenging problem, as it requires realistic emotions, head movements, identity preservation, and accurate lip sync. The method provides audio-driven emotional head generation from a single image with emotion-controllable head pose generation. Unlike existing methods, the present disclosure does not require a driving video either for pose or emotions and can generate different emotions and diverse head pose variations from an identity image, a speech audio input data and an emotion input data of an arbitrary subject in neutral emotion. The method overcomes limitations of existing emotional audio-visual datasets by learning a disentangled approach for optical flow computation approach for pose and expression. Also, the method independently computes pose-driven and expression-driven optical flow using pre-trained image generation network trained on large datasets with greater pose variability but lacking emotion annotations. The expression flow generation branch is finetuned on a smaller emotional dataset to accurately capture different emotions that are not present in original dataset while retaining pose variability from the original dataset.

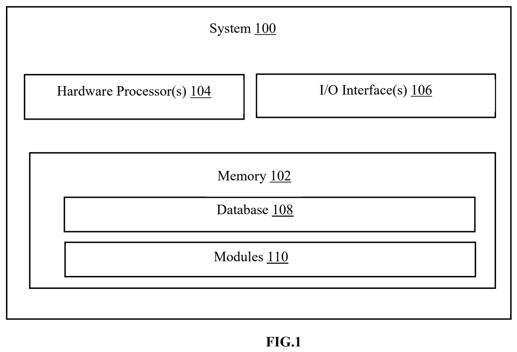

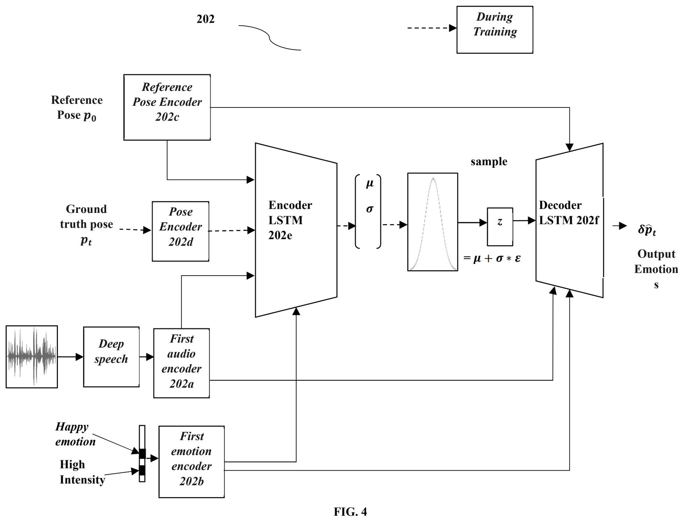

Referring now to the drawings, and more particularly to FIG.1 through FIG.9, where similar reference characters denote corresponding features consistently throughout the figures, there are shown preferred embodiments and these embodiments are described in the context of the following exemplary system and/or method.

FIG.1 illustrates an exemplary system to generate emotional talking head video according to some embodiments of the present disclosure. In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 may include a variety of software and hardware interfaces, for example, a user interface where inputs such as identity image, speech audio signal and emotions and the like are provided that facilitate multiple communications within a wide variety of networks N/W and protocol types, including wired networks, for example, LAN, cable, expression generation network, pose generation network, and image generation network etc., and wireless networks, such as WLAN, cellular and the like. In an embodiment, the I/O interface (s) 106 can include one or more ports for connecting to a number of external devices or to another server or devices. The system 100 receives inputs from user via an application installed on user-end devices connected to the system 100 such as a laptop, handheld device or the like.

The memory 102 may include any computer-readable medium known in the art including, for example, volatile memory, such as static random access memory (SRAM) and dynamic random access memory (DRAM), and/or non-volatile memory, disks, optical disks, and magnetic tapes.

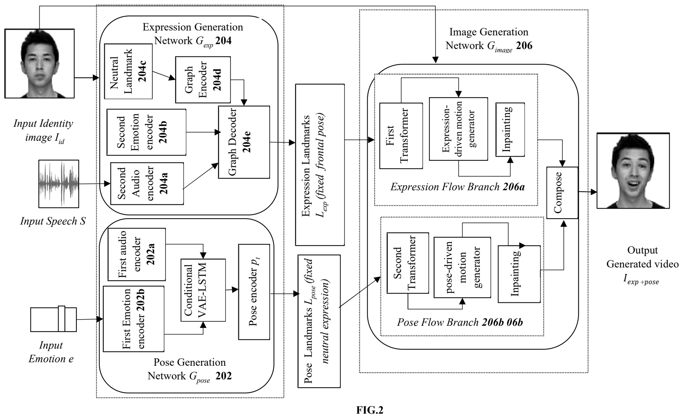

In an embodiment, the memory 102 includes a plurality of modules 110 such as an pose generation network 202, an expression generation network 204, an image generation network 206 and so on as depicted in FIG.2. The plurality of modules 110 include programs or coded instructions that supplement applications or functions performed by the system 100 for executing different steps involved in the process of generating emotional talking head video being performed by the system 100. The plurality of modules 110, amongst other things, can include routines, programs, objects, components, and data 10 structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (as shown in FIG.2).

Further, the memory 102 may comprise information pertaining to input(s)/output(s) of each step performed by the processor(s) 104 of the system 100 and methods of the present disclosure. Further, the memory 102 includes a database 108. Although the database 108 is shown internal to the system 100, it will be noted that, in alternate embodiments, the database 108 can also be implemented external to the system 100, and communicatively coupled to the system 100. The data contained within such external database may be periodically updated. For example, audio-visual datasets may be added into the database (not shown in FIG.1) and/or existing data may be modified and/or non-useful data may be deleted from the database. In one example, the data may be stored in an external system, such as a Lightweight Directory Access Protocol (LDAP) directory and a Relational Database Management System (RDBMS).

FIG.2 illustrates an architecture overview of the system 100 to generate emotional talking head video using the system of FIG.1, in accordance with some embodiments of the present disclosure.

The method of the present disclosure provides audio-driven one-shot emotional talking head generation with explicit emotion control that can generate diverse emotion-conditioned head movements on arbitrary faces for the same speech audio input data and the emotion input. In addition, the method introduces disentangled optical flow generation for pose and expression and synthesize emotion-conditioned head movements on talking head animation. Furthermore, unlike most existing methods, the present disclosure does not require a driving pose or expression source, which makes it more suited for practical applications.

The system 100 includes a pose generation network 202, an expression generation network 204, and an image generation network 206. For ease of explanation, where the system 100 receives the plurality of inputs such as the identity image, the speech audio input data and the emotion input data from an user to generate emotional talking head video.

The pose generation network 202 based on conditional variational auto encoder (VAE) obtains the plurality of inputs to generate diverse emotion-controllable 3D head movements one or more pose landmarks in fixed neutral expression. The pose generation network 202 comprises a first audio encoder 202a, a first emotion encoder 202b, a reference pose encoder 202c, a pose encoder 202d, a auto encoder 202e, and an auto decoder 202f.

Further, the expression generation network 204 generates one or more expression landmarks (fixed frontal pose) from the speech audio input data and the emotion input data for the identity image. The expression generation network 204 comprises a second audio encoder, a second emotion encoder a graph encoder, a neutral landmark encoder, and a graph decoder.

Then, the image generation network 206 obtains one or more expression landmarks from the expression generation network 204 and the one or more pose landmarks from the pose generation network 202 as inputs to be processed. This network learns fully disentangled expression flow and pose flow motion guidance. Further, the image generation network 206 comprises of disentangled expression flow branch 206a and a pose flow branch 206b. The entire image generation network 206 is pre-trained on large scale emotion agnostic dataset to learn identity and pose variety, such that the expression flow branch is fine-tuned on emotional talking head datasets for emotion variety. The method allows to exploit large scale emotion agnostic datasets for pre-training without losing the expressive ability of the network to generate accurate facial emotions.

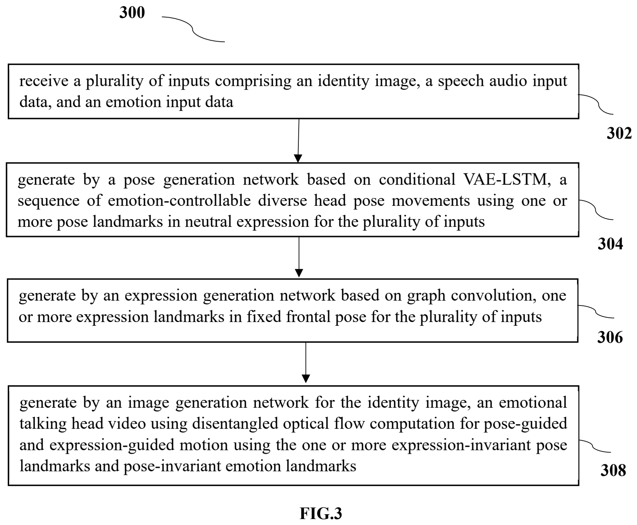

FIG.3 is a flow diagram illustrating a method to generate emotional talking head video using the system of FIG.2, in accordance with some embodiments of the present disclosure. In an embodiment, the system 100 comprises one or more data storage devices or the memory 102 operatively coupled to the processor(s) 104 and is configured to store instructions for execution of steps of the method 300 of the present disclosure will now be explained with reference to the components or blocks of the system 100 as depicted in FIG.2 through FIG.9 in accordance with an example embodiment of the present disclosure. For example, FIG.2 through FIG.9 illustrates exemplary flow diagrams of a processor-implemented method 200 for emotional talking head video generation, in accordance with some embodiments of the present disclosure.

Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to FIG.3 and the steps of the method 300, at step 302 of the method 300, the one or more hardware processors 104 of the system 100 are configured by the instructions to receive a plurality of inputs comprising an identity image, a speech audio input data and an emotion input data.

In an embodiment, input identity image ($I_{id}$) of the target subject is a face image of the target subject in neutral emotion. The neutral emotion refers to the face image in neutral emotion with closed lips. In an embodiment, the target subject may be a human, or a person whose talking face image to be generated in accordance with the speech audio input data and the emotion input data.

The speech audio input data $S$ includes a speech information and may be in the form of an audio file with a random audio play length. The emotion input data includes an emotion type and an emotion intensity. The emotion type $e$ is one type of the emotion, selected from an emotion type group including happy, sad, angry, fear, surprise, disgust, and the like. The emotion intensity is one of the emotion intensity selected from an emotion type group including low emotion intensity, medium emotion intensity, high emotion intensity, and the like.

At step 304 of the method 300, the one or more hardware processors 104 is configured to generate a sequence of emotion-controllable diverse head pose movements using one or more pose landmarks in neutral expression for the plurality of inputs utilizing a pose generation network based on conditional VAE-LSTM.

Referring to FIG.2, in an embodiment, the pose generation network $G_{pose}$ 202 based on conditional VAE and LSTM obtains the plurality of inputs such as the speech audio input data $S$, the emotion input data e, and a reference initial pose $p0$. The $G_{pose}$ 202 generates a sequence of diverse head poses $\hat{p} = \{(r_i, t_i) \in R^6 | i = 1 \cdots N\}$ for the identity image as further described. Here 'N' is the number of video frames in the output sequence, $(r_i, t_i)$ are the per-frame rotation (euler angles) and translation parameters respectively. Since head movements are also related to emotions (e.g., larger displacements for angry and happy compared to sad or neutral) an emotion control input is used for pose generation.

Further, the first audio encoder 202a of the $G_{pose}$ 202 fetches the speech audio input data, and the first emotion encoder 202b fetches the emotion input data. The $G_{pose}$ 202 fetches the plurality of inputs to be processed and initially the first audio encoder 202a of the $G_{pose}$ 202 extracts the set of audio features from the speech audio input data. Further, the first emotion encoder 202b of the $G_{pose}$ 202 extracts the set of emotion features from the emotion input data. The reference pose encoder 202c of the $G_{pose}$ 202 obtains a reference pose corresponding to the identity image. Once the features are extracted, a latent variable is obtained which is sampled from a distribution learnt during training from a trained encoder network of conditional VAE-LSTM.

The reference pose is the initial head pose corresponding to the input identity image.

Further, the decoder network 202f generates sequence of diverse head pose by concatenating the set of audio features, the set of emotion features, and the reference pose along with the latent variable sampled from distribution learnt during training. Exemplary training data size of the plurality of training samples may be above 10000 samples.

Then, the input identity image is utilized to create one or more pose landmarks in fixed frontal pose by applying rigid transformation on the sequence of diverse head pose frontal facial landmarks $\delta\hat{p}$. The generated pose sequence referred as $\hat{p} = p0 + \delta\hat{p}$ which is used to apply rigid transformation on frontal facial landmarks $L_{neu} \in R^{68 \times 3}$ (in neutral expression) to create one or more pose landmarks $L_{pose} \in R^{68 \times 3}$. Here, $L_{neu}$ refers to the facial landmarks of the identity image $I_{id}$.

In another embodiment, the pose generation network $G_{pose}$ 202 is pretrained with training samples. The encoder network 202e is trained using training samples during training phase comprising a set of training audio features, a set of training emotion features, a training reference pose, and a ground truth pose. The ground-truth image is a reference or an annotated face image corresponding to the received emotion input data, may be collected from a video in the form of a video frame. $G_{pose}$ is trained using a training loss function by minimizing $L_{cvae}$ as described below in equation 1,

$$Training\ loss\ L_{cvae} = \lambda_e L_e + \lambda_{KL} L_{KL} --- Equation\ 1$$

where $L_e$ is a mean-squared error between predicted and ground truth poses, and $L_{KL}$ is the KL divergence loss for pose diversity. Loss weights are described $\lambda_e = 0.01$ and $\lambda_{KL} = 1.0$ have been experimentally set using validation. Training loss is sum of mean-squared error between predicted and ground truth poses and loss weights with KL divergence loss and loss weights.

At step 306 of the method 300, the one or more hardware processors 104 is configured to generate one or more facial expression landmarks in fixed frontal pose for the plurality of inputs using the expression generation network based on graph convolution. The expression generation network comprises a second audio encoder 204a, a second emotion encoder 204b, a graph encoder 204c, a neutral landmark encoder 204d, and a graph decoder 204e.

The expression generation network $G_{exp}$ 204 adapts recent landmark graph convolution based enables in rendering facial emotions and lip movements on landmarks in a fixed (frontal) head pose. The second audio encoder 204a obtains the speech audio input data to extract the second set of audio features. The second emotion encoder 204b extracts the second set of emotion features from the emotion input data. The graph encoder 204c obtains neutral landmark of the identity image from the neutral landmark encoder 204d. Then, the graph decoder 204e obtains the second set of audio features, the emotion input data, the neutral landmark, and generates the expression landmarks $L_{exp} \in R^{68x3}$ in fixed (frontal) pose. The $G_{exp}$ 204 uses a mouth graph encoder $E_{mg}$ which performs graph convolution on mouth landmark graphs (consisting of only mouth landmark vertices) improving lip sync accuracy with the help of a proposed landmark lip sync loss $L_{synch}$ as in Equation 2 and 3.

In one embodiment, $G_{exp}$ 204 is pretrained using objective function as in equation 2,

$$\mathcal{L}_{lm} = \lambda_{mse} L_{mse} + \lambda_{synch} L_{synch} + \lambda_{adv} L_{adv} --- Equation\ 2$$

Where,

$L_{mse}$ is the mean-squared error between predicted landmarks and ground-truth landmarks, $L_{adv}$ is the LSGAN adversarial loss function computed with the help of graph discriminator. The loss hyperparameters are described as $\lambda mse=10.0$, $Asynch=0.1$ and $\lambda adv=5.0$ are experimentally set using validation data.

The following contrastive loss $L_{synch}$ to align audio feature $f_a$ from the second audio encoder 204a with the mouth graph encoded feature $f_m^{synch} = E_{mg}(G_m)$ where $G_t$ mouth landmark set $G_m$ is temporally aligned with $f_a$ as in Equation 3,

$$L_{synch} = log(\vec{f_a}.\vec{f_m^{synch}}) + log(1 - \vec{f_a}.\vec{f_m^o}) --- Equation\ 3$$

Where, $\vec{f_m^o}$ is the embedded feature of a GT mouth landmark temporally out of sync (time-shifted with a random offset) with respect to the set of second audio features $\vec{f_a}$. The loss hyperparameters are described as $\lambda_{mse} = 10.0$, $\lambda_{synch} = 0.1$ and $\lambda_{adv} = 5.0$ are experimentally set using validation data.

At step 308 of the method 300, the one or more hardware processors 104 is configured to generate an emotional talking head video using disentangled optical flow computation for pose-guided and expression-guided motion for the identity image using the one or more expression-invariant pose landmarks and pose-invariant emotion landmarks utilizing an image generation network The image generation network comprises of a disentangled expression flow branch and a pose flow branch.

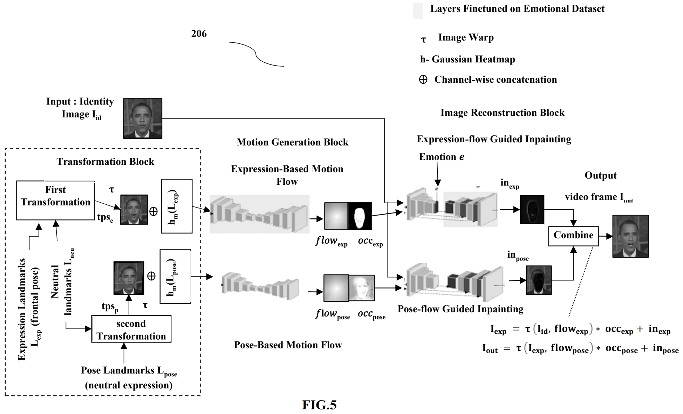

Referring now FIG.5, the image generation network 206 obtains the identity image $I_{id}$, the one or more expression landmarks $L_{exp}$ (in frontal pose) obtained from the $G_{exp}$ 204 and the one or more pose landmarks $L_{pose}$ (in neutral expression) obtained from the $G_{pose}$ 202 to generate the output video frame $I_{out}$ containing both expression-driven and pose driven motion. The image generation network $G_{img}$ 206 comprises of disentangled expression flow branch and a pose flow branch. The disentangled expression flow branch processes the one or more facial expression landmarks and the pose flow branch processes the one or more pose landmarks.

The image generation network $G_{img}$ 206 has two branches that includes the expression flow branch, and the pose flow branch. The $G_{img}$ 206 is pretrained on large scale datasets for learning identity and pose diversity, and subsequently fine-tuned on emotional datasets for learning expression diversity.

The expression flow branch includes a first transformation block, an expression driven motion generation block and an expression-based motion flow guided image inpainting block. The facial motion due to expression deformation and head movement are modeled using a non-linear Thin plate spline (TPS) transformation of facial landmarks.

The expression flow branch processes the one or more facial expression landmarks to generate disentangled expression inpainting feature map $in_{exp}$. Initially, the first transformation block computes a thin plate spline transformation function $tps_e$ between one or more expression landmarks and the input neutral landmarks extracted from the identity image $tps_e = TPS(L_{exp}, L_{neu})$. The thin plate spline transformation function is applied on the identity image to generate one or more warped images. The expression driven motion generation block computes an optical flow map $flow_{exp}$ and an occlusion map $occ_{exp}$ to model fine movements of the facial motion. The expression driven motion generation block consists of speech-driven lip movement and emotion-driven expression changes on landmarks in a fixed head pose using the identity image the thin plate spline transformation function, and an gaussian heatmap representation of facial landmarks by computing the mapping $g_e : (I_{id}, tps_e, h_m(L_{exp})) \rightarrow (flow_{exp}, occ_{exp})$. Further, the expression based motion flow guided image inpainting block generates the reconstructed output video frame using the identity image and the optical flow map $flow_{exp}$ and an occlusion map $occ_{exp}$ by guiding the disentangled expression inpainting feature map $in_{exp}$ guiding the color inpainting in regions of the expression changes. The inpainting is computed from the mapping $h_e : (I_{id}, flow_{exp}, occ_{exp}, e) \rightarrow in_{exp}$.

The pose flow branch includes a second transformation block, a pose-driven motion generation block and a pose-based motion flow guided image inpainting block. The pose flow branch processes the one or more pose landmarks to generate image inpainting regions of the head pose. Here, the second transformation block computes a thin plate spline transformation function $tps_p$ between one or more pose landmarks and the input neutral landmarks extracted from the identity image $tps_p = TPS(L_{pose}, L_{neu})$. The pose-driven motion generation block computes an optical flow map $flow_{pose}$ and an occlusion map $occ_{pose}$ to model head motion from displacement of pose landmarks in fixed neutral expression $g_p : (I_{id}, tps_p, h_m(L_{pose})) \rightarrow (flow_{pose}, occ_{pose})$. Finally, the pose based motion flow guided image inpainting block guide the color inpainting in regions of the head pose changes in the reconstructed output video frame using the identity image and the optical flow map $flow_{pose}$ and an occlusion map $occ_{pose}$. The inpainting feature map $in_{pose}$ is computed from the mapping $h_p : (I_{id}, flow_{pose}, occ_{pose}) \rightarrow in_{pose}$.

Finally, the image generation network $G_{img}$ 206 generates emotional talking head video for the identity image $I_{id}$ by combining the image inpainting regions of the head pose $in_{pose}$ and the disentangled expression inpainting feature map $in_{exp}$ as in Equation 4.

$$I_{exp} = \tau\left(I_{id}, flow_{exp}\right) * occ_{exp} + in_{exp}$$

$$I_{pose} = \tau\left(I_{exp}, flow_{pose}\right) * occ_{pose} + in_{pose}$$

$$\text{--- Equation 4}$$

where $\tau (.)$ warps the input image based on the flow.

Also, the image generation network 206 is pretrained using the objective function $L_{img}$ in Equation 5,

$$L_{img} = \lambda_{per}L_{per} + \lambda_{gan}L_{gan} + \lambda_{warp}L_{warp} + \lambda_{id}L_{id} + \lambda_{occreg}L_{occreg}.$$

$$\text{---- Equation 5}$$

Where,

$L_{per}$ is a multi-scale perceptual loss based on L1- distance between features of the predicted and ground truth image using a pre-trained VGG model,

$\lambda_{per}$ is a weight of loss function of $L_{per}$ and values are given below,

$L_{gan}$ is the LSGAN loss computed using a multi-scale discriminator,

$\lambda_{gan}$ is a weight of loss function of $L_{gan}$,

$L_{id}$ is the identity loss which computes the cosine similarity between features of the generated and source identity image using a pretrained ArcFace network,

$\lambda_{id}$ is weight of loss function of $L_{id}$,

$L_{warp}$ is a warping loss that computes the distance between warped feature maps of inpainting network encoder produced by the input image and target image, for accurate estimation of optical flow,

$\lambda_{warp}$ is a weight of loss function of $L_{warp}$,

$L_{occreg}$ is occlusion regularization loss,

The proposed novel occlusion regularization loss $L_{occreg}$ is crucial for preserving identity information since the flow and occlusion maps lack supervision. $\lambda_{occreg}$ is a loss function of occlusion regularization loss $L_{occreg}$. The occlusion regularization function uses a face segmentation mask M (excluding hair, clothes, background) of the target ground truth image as in Equation 6.

$$L_{occreg} = \alpha * \left( (1 - occ_{exp}) * M + occ_{exp} * (1 - M) \right) + \left( 1 - occ_{pose} \right) * M$$

---- Equation 6

By experimental validation, loss weights are set to $\lambda_{per} = 2$, $\lambda_{gan} = 1$, $\lambda_{warp} = 10$, $\lambda_{id} = 1$, $\lambda_{occreg} = 10$, $\alpha = 3$.

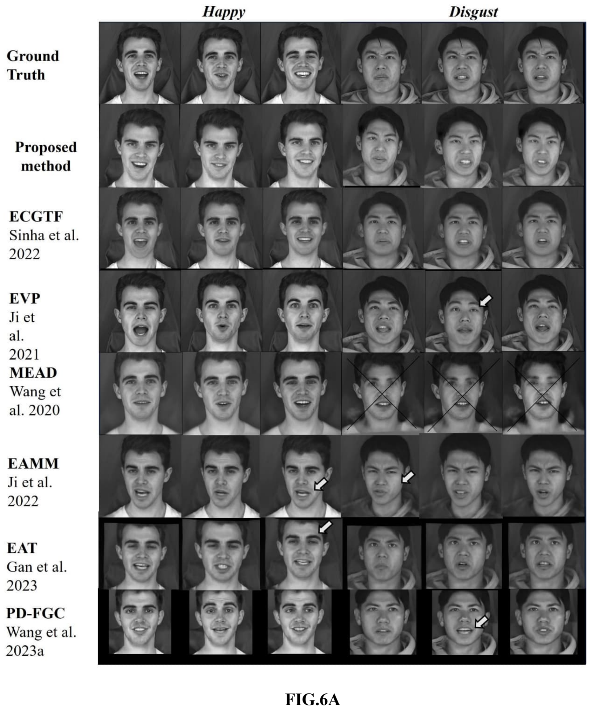

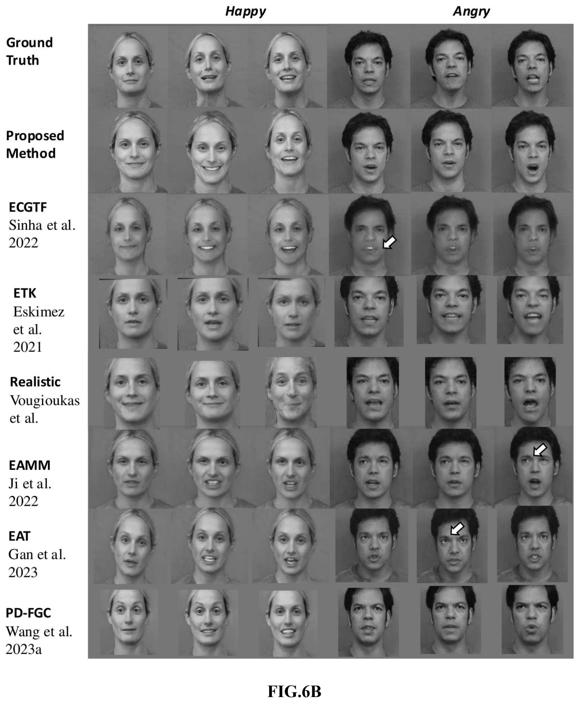

FIG.6A and FIG.6B illustrates quantitative results of the present disclosure on magazine of early American dataset (MEAD) dataset and crowd-sourced emotional multimodal actor dataset (CREMA-D) dataset in comparison to the state-of-the-art (SOTA) methods for emotional talking head video.

Table 1 and Table 2 illustrates quantitative results on emotional datasets MEAD and CREMA-D dataset. In terms of image quality metrics, the method achieves best values of SSIM on MEAD, and best value of FID and CSIM on CREMA-D. It is to be noted that EVP and MEAD are trained on person-specific models, hence they achieve the best values of FID and CSIM respectively.

Table 1 - Quantitative comparison with audio-driven talking head generation methods on Emotional datasets MEAD Dataset

| Method | MEAD | | | | | |
|---|---|---|---|---|---|---|
| | SSIM | FID | CSIM | $Sync_{conf}$ | M/F-LMD | Emotion accuracy |
| *Wav2Lip | 0.57 | 67.49 | 0.82 | **8.97** | 3.11/3.71 | 17.9 |
| *MakeItTalk | 0.58 | 51.88 | _0.83_ | _5.28_ | 3.61/4.00 | 15.2 |
| *Audio2Head | 0.69 | 117.92 | 0.627 | 3.20 | 3.22/3.26 | 42.0 |
| Realistic | 0.69 | 77.42 | 0.42 | 1.89 | 10.4/5.6 | 57.1 |
| ETK | 0.48 | 82.21 | 0.56 | 2.75 | 3.73/3.81 | 82.1 |
| MEAD | 0.68 | 22.52 | **0.86** | 1.83 | 2.52/3.16 | 76.0 |
| EVP | 0.71 | **7.99** | 0.67 | 1.21 | 2.45/3.01 | 83.6 |
| EAMM | 0.66 | 29.01 | 0.74 | 2.26 | 2.41/2.55 | 64.6 |
| EMMN | 0.66 | 59.72 | 0.75 | 3.57 | 2.78/2.87 | 72.1 |
| ECGTF | _0.77_ | 35.41 | 0.79 | 3.05 | _2.18/1.24_ | _85.5_ |
| EAT | 0.68 | 31.79 | 0.71 | 3.93 | 2.25/2.47 | 75.4 |
| PD-FGC | 0.73 | 28.81 | 0.66 | 4.38 | 5.03/6.51 | 82.3 |
| **Present disclosure** | **0.81** | _23.05_ | _0.83_ | 4.48 | **2.14/1.22** | **93.2** |

Referring to the Table 1 and Table 2, the representation of best value of metrics are marked in Bold and the second best value is marked in italics and underlined value. However, the method of the present disclosure obtains the best results on MEAD dataset among arbitrary-face generalized methods. Al-though Sinha et al., Emotion-controllable generalized talking face generation (ECGTF) achieves highest SSIM on CREMA-D, ECGTF generates static head poses and is outperformed by the method in Fréchet inception distance (FID) and CSIM. Also, the proposed method achieves highest audio-visual accuracy on CREMA-D. Although MakeItTalk - Zhou et al.Makelttalk: speaker-aware talking-head animation and Prajwal et al., A lip sync expert is all you need for speech to lip generation in the wild (Wav2Lip) outperform the proposed method in $Sync_{conf}$ on MEAD dataset. Also, the proposed method achieves best values of MLMD and F-LMD on MEAD, thereby indicating good lip sync accuracy on facial landmarks. Moreover, MakeItTalk andWav2Lip are emotion-agnostic methods hence they perform poorly in emotion accuracy metrics. Wang et al., Audio2head refers to Audio-driven one-shot talking-head generation with natural head motion (Audio2Head). Tan et al., EMMN Emotional motion memory network for audio-driven emotional talking face generation (EMMN).

Table 2 -Quantitative comparison with audio-driven talking head generation methods on Emotional datasets CREMA-D Dataset

| Method | CREMA-D | | | | | |
|---|---|---|---|---|---|---|
| | SSIM | FID | CSIM | $Sync_{conf}$ | M/F-LMD | Emotion accuracy |
| *Wav2Lip | 0.59 | 44.44 | 0.68 | 2.4 | 3.32/3.41 | 45.4 |
| *MakeItTalk | 0.61 | 31.76 | _0.78_ | 2.16 | 3.36/3.48 | 37.0 |
| *Audio2Head | 0.59 | _19.97_ | 0.61 | 2.19 | 3.28/3.35 | 54.9 |
| Realistic | 0.7 | 71.12 | 0.51 | 1.12 | 2.90/2.80 | 55.3 |
| ETK | 0.63 | 218.59 | 0.75 | 2.39 | 3.06/3.10 | 65.7 |
| MEAD | - | - | - | - | - | - |
| EVP | - | - | - | - | - | - |
| EAMM | 0.65 | 105.7 | 0.66 | 2.35 | 3.12/3.29 | 56.4 |
| EMMN | 0.68 | - | - | 2.41 | 3.03/3.16 | - |
| ECGTF | **0.9** | 68.45 | 0.75 | _3.53_ | _2.41/1.35_ | 75.0 |
| EAT | 0.56 | 27.44 | 0.68 | 2.43 | 7.42/4.98 | _79.5_ |
| PD-FGC | 0.64 | 23.78 | 0.73 | 3.15 | 8.17/7.4 | 62.9 |
| **Present disclosure** | _0.85_ | **16.93** | **0.79** | **3.61** | **1.73/0.80** | **82.2** |

It is noted, the method achieves significantly improved emotional accuracy over existing state-of-the-art emotional talking head generation methods (improvement of 9% on MEAD and around 3% on cross-dataset evaluation on CREMA-D). This indicates the effectiveness of the proposed disentangled learning of expression and pose. It is to be noted that unlike existing methods which use expression source (EAMM, PDFGC) and pose source (EAMM, PD-FGC,EAT, EVP) videos. Also, the method does not rely on any driving videos, thereby being more suitable for practical applications. The method is able to generate identity-preserving and overall good texture quality on CREMA-D test subjects, which correlates with the improvement in texture quality metrics in Table 1 and Table 2. Although ECGTF has higher SSIM on CREMA-D in Table 1 and Table 2, it can be observed that the proposed method has much higher texture quality and identity preservation than ECGTF, despite their one-shot fine-tuning on CREMA-D test subjects.

Datasets: The method is trained using traditional known datasets such HDTF, Multi-view Emotional Audio-visual Dataset (MEAD) and Ryerson Audio-Visual Database of Emotional Speech and Song (RAVDESS). The method is evaluated on test subjects from emotional datasets MEAD, Crowd Sourced Emotional Multimodal Actors Dataset (CREMA-D) (for cross-dataset evaluation) and HDTF (for evaluation on neutral emotion).

Implementation Details: The method is implemented in PyTorch and trained on a single NVIDIA A100 GPU. The networks such as $G_{pose}$ 202, $G_{exp}$ 204 and $G_{img}$ 206 are trained independently. $G_{pose}$ 202, $G_{exp}$ 204 and $G_{img}$ 206 are trained on known datasets such as MEAD and RAVDESS respectively. $G_{pose}$ 202 and $G_{exp}$ 204 are trained with batch size 256 and 100 respectively. $G_{img}$ 206 is pre-trained for 25 epochs on 210 subjects from large scale HDTF dataset. Then the expression-based motion branches of $G_{img}$ 206 are fine-tuned for 5 epochs on emotional training data consisting of total 60 subjects from MEAD and RAVDESS.

Metrics: The metrics structural similarity index measure (SSIM), (FID) evaluates texture quality and CSIM (cosine similarity of Arcface features) to measure identity preservation. For audio-visual sync accuracy, SyncNet AV confidence is computed $Sync_{conf}$ and landmark distance metrics M-LMD (mouth LMD) and F-LMD (Face LMD).

Traditional methods MEAD and EVP (referring Table 1 and Table 2) train subject-specific models, hence their texture quality on MEAD (FIG.6A) appears to be very good, but the emotional accuracy (Disgust emotion) is lower than our method. Moreover, MEAD and emotion audio-driven emotional video portraits (EVP) requires retraining with subject-specific emotion data which is not suited for practical applications. Realistic speech-driven facial animation with Gans (Realistic) and Speech driven talking face generation from a single image and an emotion condition (ETK) demonstrates significant texture blur in FIG.6A owing to lower resolution frames. One-shot emotional talking face via audio-based emotion-aware motion model (EAMM) demonstrates inconsistent emotion in upper and lower face in FIG.6B (first subject), and facial distortions (second subject). EAMM generates happy emotion inaccurately because only the upper part of the face is transformed using the expression source video. Although Efficient emotional adaptation for audio-driven talking-head generation (EAT) uses emotion adaptation, the emotional expressions appears to be suppressed (happy emotion is not perceptible in FIG.6A and FIG.6B, disgusted expression resembles angry in FIG. 6A), and identity of upper face appears altered (second subject in FIG.6B). "Progressive disentangled representation learning for fine-grained controllable talking head synthesis (PD-FGC)"results show emotional accuracy with 82.3 comparatively lesser than the present disclosure also uses expression source video, but fails to accurately capture Disgust emotion (second subject in FIG.6A), and also generates cropped faces which contain significant texture blur in the mouth.

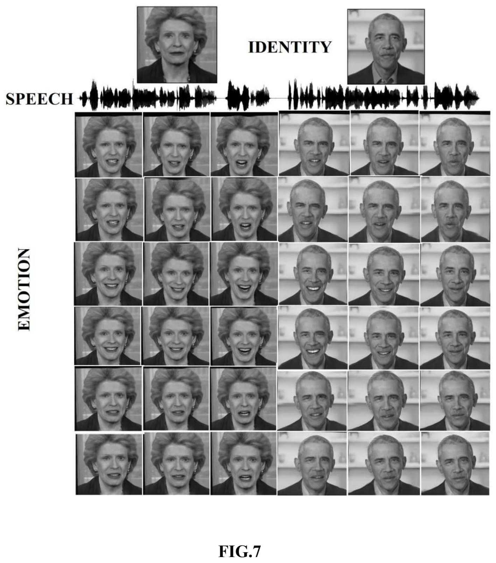

FIG.7 illustrates one-shot talking head generation method synthesized different emotions and head movements on arbitrary faces. The method is compared with arbitrary-face methods on emotional talking head generation in FIG.7 for demonstrating experimental results on arbitrary face for generalization ability. The method achieves best results simultaneously win identity preservation, emotional accuracy and head pose diversity. The results of PD-FGC contains blur in mouth texture. EAT, EAMM and Speech-driven portrait animation with controllable expression (SPACE) are not able to capture facial emotions accurately. Although SPACE generates diverse head movements, the diversity of head poses, and the emotional accuracy is much lower than the method (referring now FIG.7). Although EAT uses emotion adaptation, the method achieves better expressions and emotional accuracy than EAT, which can be attributed to the disentangled approach for learning pose and expressions. More results on arbitrary faces are in the supplementary video.

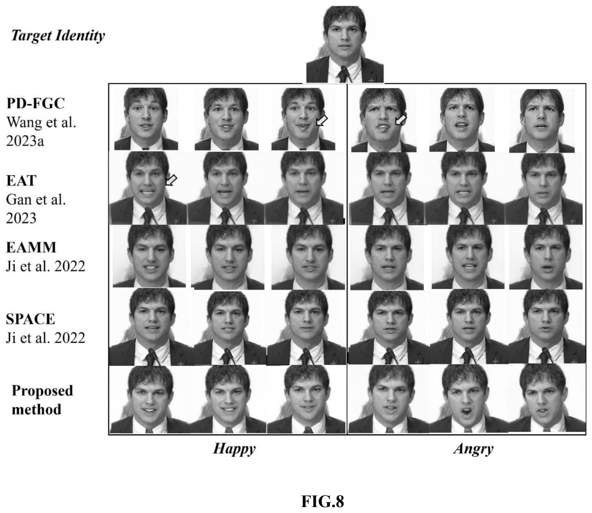

FIG.8 illustrates qualitative comparison of emotional talking head methods synthesizing head movements on an arbitrary face with HDTF test subjects. FIG.8 demonstrates results on HDTF test subjects demonstrating diverse head movements from the same audio and emotion input. The method is capable of generating emotion-conditioned head poses which is not attempted in prior works. FIG.6A and FIG.B show a qualitative comparison of the method.

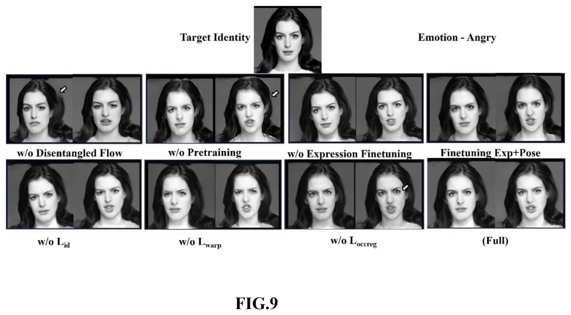

FIG.9 illustrates qualitative results for ablation study on random face outside existing datasets. Ablation study demonstrates the significance of different components of the proposed method, the detailed ablation study, with the following network and training configurations as described below,

(1) w/o Disentangled Flow : A single optical flow and occlusion map is generated instead of disentangled motion generation.
(2) w/o Fine-tuning: The method with $G_{image}$ trained on large scale neutral emotion data, without fine-tuning on emotional data,
(3) w/o Pretraining: The method without pre-training of $G_{image}$ on large scale neutral data,
(4) Fine-tuning Expression + Pose: The method with both expression and pose branches of $G_{image}$ fine-tuned on emotional data,
(5-7) w/o $L_{id}$, $L_{occreg}$, $L_{warp}L_{id}$: The method trained without identity loss, occlusion regularization loss and flow regularization loss respectively.
(8) The method includes two-stage training, disentangled optical flow, and all the losses in Equation. 5. Since, CREMA-D dataset contains lower head movements, texture quality metric FID is not adversely affected by head movement in. However, the proposed method achieves 40% improvement in emotion accuracy. The qualitative results FIG.9 demonstrates the overall improvement in visual quality and emotion accuracy. User study subjectively evaluate the method in comparison to latest emotional talking head methods EAMM , EAT, ECGTF , PD- FGC and EVP. 20 participants rated a total of 20 generated videos. Each video was assessed for identity preservation, lip synchronization, realism of the generated video and the perceived emotions from the generated videos. The user study evaluation results in FIG.9 demonstrate that method outperforms the state-of-the-art methods in identity preservation, lip-synchronization, generated video realism and emotion accuracy.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of emotional talking head video. The embodiment, thus provides method and system for generating emotional talking head using disentangled pose and expression flow guidance. Moreover, the embodiments herein further provides enhanced disentangled approach for learning pose and expression. Facial expressions including lip sync is learnt on facial landmarks in fixed head pose, along with synthesis of emotion-controllable head poses on landmarks in fixed expression. The present image generation network learning disentangled pose flow and expression flow is pre-trained on a large scale neutral emotion dataset for facial identity and pose diversity and subsequently the expression flow branch is fine-tuned on emotional datasets for emotion diversity. Additionally, the method achieves significant improvement in emotion accuracy and diverse generation of emotion-conditioned head movements compared to state-of-the-art emotional talking head generation methods.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (300) for generating emotional talking head video, the method comprising:

receiving (302) via one or more hardware processors, a plurality of inputs comprising an identity image, a speech audio input data and an emotion input data;

generating (304) by a pose generation network based on conditional VAE-LSTM via the one or more hardware processors, a sequence of emotion-controllable diverse head pose movements using one or more pose landmarks in neutral expression for the plurality of inputs, wherein the pose generation network comprises a first audio encoder, a first emotion encoder, a pose encoder, a reference pose encoder, an LSTM encoder and a LSTM decoder;

generating (306) by an expression generation network based on graph convolution via the one or more hardware processors, one or more expression landmarks in fixed frontal pose for the plurality of inputs, wherein the expression generation network comprises a second audio encoder, a second emotion encoder, a face graph encoder, a face graph decoder; and a mouth graph encoder, and

generating (308) by an image generation network for the identity image via the one or more hardware processors, an emotional talking head video using disentangled optical flow computation for pose-guided and expression-guided motion using the one or more expression-invariant pose landmarks and pose-invariant emotion landmarks, wherein the image generation network comprises of a disentangled expression flow branch and a pose flow branch,

wherein the disentangled expression flow branch processes the one or more expression landmarks, and the pose flow branch processes the one or more pose landmarks,

wherein the expression flow branch includes a first transformation block, an expression driven motion generation block and an expression flow guided image inpainting block, and

wherein the pose flow branch includes a second transformation block, a pose-driven motion generation block and a pose flow guided image inpainting block.

2. The processor implemented method as claimed in claim 1, wherein the pose generation network generates a sequence of diverse head pose for the identity image by performing the steps of:

extracting (i) a first set of audio features from the speech audio input data using the first audio encoder, (ii) a first set of emotion features from the emotion input data using the first emotion encoder, and (iii) a reference pose corresponding to the pose of the identity image using the reference pose encoder;

obtaining a latent variable sampled from a distribution learnt during training from a trained encoder network of conditional VAE-LSTM, wherein the encoder network is trained using training samples during training phase comprising a set of training audio features, a set of training emotion features, a training reference pose, and a ground truth pose; and

generating by the conditional VAE-LSTM decoder network, a sequence of diverse head poses by concatenating the set of audio features, the set of emotion features, and the reference pose along with a latent variable sampled from a distribution learnt during training; and

creating one or more pose landmarks by applying rigid transformation on the sequence of diverse head pose frontal facial landmarks.

3. The processor implemented method as claimed in claim 1, wherein the expression flow branch processes the one or more facial expression landmarks to generate disentangled expression inpainting feature map $in_{exp}$ by performing the steps of:

computing by the first transformation block, a thin plate spline transformation function between one or more expression landmarks and the input neutral landmarks extracted from the identity image $tps_e = TPS(L_{exp}, L_{neu})$;

applying the thin plate spline transformation function on the identity image to generate one or more warped images;

computing by the expression driven motion generation block an optical flow map $flow_{exp}$ and an occlusion map $occ_{exp}$ to model facial motion consisting of speech-driven lip movement and emotion-driven expression changes on landmarks in a fixed head pose using the identity image, the thin plate spline transformation function, and a gaussian heatmap representation of facial landmarks; and

computing by the expression flow guided image inpainting block a disentangled expression inpainting feature map $in_{exp}$ guiding the color inpainting in regions of the expression changes in the reconstructed output video frame using the identity image and the optical flow map $flow_{exp}$ and an occlusion map $occ_{exp}$.

4. The processor implemented method as claimed in claim 1, wherein the pose flow branch processes the one or more pose landmarks to generate image inpainting regions of the head pose by performing the steps of:

computing by the second transformation block, a thin plate spline transformation function between one or more pose landmarks and the input neutral landmarks extracted from the identity image $tps_p = TPS(L_{pose}, L_{neu})$;

computing by the pose-driven motion generation block, an optical flow map $flow_{pose}$ and an occlusion map $occ_{pose}$ to model head motion from displacement of pose landmarks in fixed neutral expression; and

determining by the pose flow guided image inpainting block a disentangled feature map $in_{pose}$ for guiding the inpainting in regions of head pose changes in the reconstructed output video frame using the identity image and the optical flow map $flow_{pose}$ and an occlusion map $occ_{pose}$.

5. The processor implemented method as claimed in claim 1, wherein the image generation network generates emotional talking head video for the identity image by combining the image inpainting regions of the head pose $in_{pose}$ and the disentangled expression inpainting feature map $in_{exp}$.

6. A system (100), for generating emotional talking head video comprising:

memory (102) storing instructions;
one or more communication interfaces (106); and

one or more hardware processors (104) coupled to the memory (102) via the one or more communication interfaces (106), wherein the one or more hardware processors (104) are configured by the instructions to:

receive a plurality of inputs comprising an identity image, a speech audio input data and an emotion input data;

generate by a pose generation network based on conditional VAE-LSTM, a sequence of emotion-controllable diverse head pose movements using one or more pose landmarks in neutral expression for the plurality of inputs, wherein the pose generation network comprises a first audio encoder, an first emotion encoder, a pose encoder, a reference pose encoder, an LSTM encoder and a LSTM decoder;

generate by an expression generation network based on graph convolution, one or more expression landmarks in fixed frontal pose for the plurality of inputs, wherein the expression generation network comprises a second audio encoder, an second emotion encoder, a face graph encoder, a face graph decoder, and a mouth graph encoder, and

generate by an image generation network for the identity image, an emotional talking head video using disentangled optical flow computation for pose-guided and expression-guided motion using the one or more expression-invariant pose landmarks and pose-invariant emotion landmarks, wherein the image generation network comprises of a disentangled expression flow branch and a pose flow branch,

wherein the disentangled expression flow branch processes the one or more expression landmarks and the pose flow branch processes the one or more pose landmarks,

wherein the expression flow branch includes a first transformation block, an expression driven motion generation block and an expression low guided image inpainting block, and

wherein the pose flow branch includes a second transformation block, a pose-driven motion generation block and a pose flow guided image inpainting block.

7. The system as claimed in claim 6, wherein the pose generation network generates a sequence of diverse head pose for the identity image by performing the steps of:

extracting (i) a first set of audio features from the speech audio input data using the first audio encoder, (ii) a first set of emotion features from the emotion input data using the first emotion encoder, and (iii) a reference pose corresponding to the pose of the identity image using the reference pose encoder;

obtaining a latent variable sampled from a distribution learnt during training from a trained encoder network of conditional VAE-LSTM, wherein the encoder network is trained using training samples during training phase comprising a set of training audio features, a set of training emotion features, a training reference pose, and a ground truth pose; and

generating by the conditional VAE-LSTM decoder network, a sequence of diverse head pose by concatenating the set of audio features, the set of emotion features, and the reference pose along with a latent variable sampled from a distribution learnt during training; and

creating one or more pose landmarks by applying rigid transformation on the sequence of diverse head pose frontal facial landmarks.

8. The system as claimed in claim 6, wherein the expression flow branch processes the one or more facial expression landmarks to generate disentangled expression inpainting feature map $in_{exp}$ by performing the steps of:

computing by the first transformation block, a thin plate spline transformation function between one or more expression landmarks and the input neutral landmarks extracted from the identity image $tps_e = TPS(L_{exp}, L_{neu})$;

applying the thin plate spline transformation function on the identity image to generate one or more warped images;

computing by the expression driven motion generation block an optical flow map $flow_{exp}$ and an occlusion map $occ_{exp}$ to model facial motion consisting of speech-driven lip movement and emotion-driven expression changes on landmarks in a fixed head pose using the identity image, the thin plate spline transformation function, and a gaussian heatmap representation of facial landmarks; and

computing by the expression flow guided image inpainting block a disentangled expression inpainting feature map $in_{exp}$ guiding the color inpainting in regions of the expression changes in the reconstructed output video frame using the identity image and the optical flow map $flow_{exp}$ and an occlusion map $occ_{exp}$.

9. The system as claimed in claim 6, wherein the pose flow branch processes the one or more pose landmarks to generate image inpainting regions of the head pose by performing the steps of:

computing by the second transformation block, a thin plate spline transformation function between one or more pose landmarks and the input neutral landmarks extracted from the identity image $tps_p = TPS(L_{pose}, L_{neu})$;

computing by the pose-driven motion generation block, an optical flow map $flow_{pose}$ and an occlusion map $occ_{pose}$ to model head motion from displacement of pose landmarks in fixed neutral expression; and

determining by the pose flow guided image inpainting block a disentangled feature map $in_{pose}$ for guiding the inpainting in regions of head pose changes in the reconstructed output video frame using the identity image and the optical flow map $flow_{pose}$ and an occlusion map $occ_{pose}$.

10. The system as claimed in claim 6, wherein the image generation network generates emotional talking head video for the identity image by combining the image inpainting regions of the head pose $in_{pose}$ and the disentangled expression inpainting feature map $in_{exp}$.

11. One or more non-transitory machine-readable information storage mediums comprising one or more instructions which when executed by one or more hardware processors cause:

receiving a plurality of inputs comprising an identity image, a speech audio input data and an emotion input data;

generating by a pose generation network based on conditional VAE-LSTM a sequence of emotion-controllable diverse head pose movements using one or more pose landmarks in neutral expression for the plurality of inputs, wherein the pose generation network comprises a first audio encoder, a first emotion encoder, a pose encoder, a reference pose encoder, an LSTM encoder and a LSTM decoder;

generating by an expression generation network based on graph convolution one or more expression landmarks in fixed frontal pose for the plurality of inputs, wherein the expression generation network comprises a second audio encoder, a second emotion encoder, a face graph encoder, a face graph decoder; and a mouth graph encoder, and

generating by an image generation network for the identity image an emotional talking head video using disentangled optical flow computation for pose-guided and expression-guided motion using the one or more expression-invariant pose landmarks and pose-invariant emotion landmarks, wherein the image generation network comprises of a disentangled expression flow branch and a pose flow branch,

wherein the disentangled expression flow branch processes the one or more expression landmarks, and the pose flow branch processes the one or more pose landmarks,

wherein the expression flow branch includes a first transformation block, an expression driven motion generation block and an expression flow guided image inpainting block, and

wherein the pose flow branch includes a second transformation block, a pose-driven motion generation block and a pose flow guided image inpainting block.

12. The one or more non-transitory machine-readable information storage mediums of claim 11, wherein the pose generation network generates a sequence of diverse head pose for the identity image by performing the steps of:

extracting (i) a first set of audio features from the speech audio input data using the first audio encoder, (ii) a first set of emotion features from the emotion input data using the first emotion encoder, and (iii) a reference pose corresponding to the pose of the identity image using the reference pose encoder;

obtaining a latent variable sampled from a distribution learnt during training from a trained encoder network of conditional VAE-LSTM, wherein the encoder network is trained using training samples during training phase comprising a set of training audio features, a set of training emotion features, a training reference pose, and a ground truth pose; and

generating by the conditional VAE-LSTM decoder network, a sequence of diverse head poses by concatenating the set of audio features, the set of emotion features, and the reference pose along with a latent variable sampled from a distribution learnt during training; and

creating one or more pose landmarks by applying rigid transformation on the sequence of diverse head pose frontal facial landmarks.

13. The one or more non-transitory machine-readable information storage mediums of claim 11, wherein the expression flow branch processes the one or more facial expression landmarks to generate disentangled expression inpainting feature map $in_{exp}$ by performing the steps of:

computing by the first transformation block, a thin plate spline transformation function between one or more expression landmarks and the input neutral landmarks extracted from the identity image $tps_e = TPS(L_{exp}, L_{neu})$;

applying the thin plate spline transformation function on the identity image to generate one or more warped images;

computing by the expression driven motion generation block an optical flow map $flow_{exp}$ and an occlusion map $occ_{exp}$ to model facial motion consisting of speech-driven lip movement and emotion-driven expression changes on landmarks in a fixed head pose using the identity image, the thin plate spline transformation function, and a gaussian heatmap representation of facial landmarks; and

computing by the expression flow guided image inpainting block a disentangled expression inpainting feature map $in_{exp}$ guiding the color inpainting in regions of the expression changes in the reconstructed output video frame using the identity image and the optical flow map $flow_{exp}$ and an occlusion map $occ_{exp}$.

14. The one or more non-transitory machine-readable information storage mediums of claim 11, wherein the pose flow branch processes the one or more pose landmarks to generate image inpainting regions of the head pose by performing the steps of:

computing by the second transformation block, a thin plate spline transformation function between one or more pose landmarks and the input neutral landmarks extracted from the identity image $tps_p = TPS(L_{pose}, L_{neu})$;

computing by the pose-driven motion generation block, an optical flow map $flow_{pose}$ and an occlusion map $occ_{pose}$ to model head motion from displacement of pose landmarks in fixed neutral expression; and

determining by the pose flow guided image inpainting block a disentangled feature map $in_{pose}$ for guiding the inpainting in regions of head pose changes in the reconstructed output video frame using the identity image and the optical flow map $flow_{pose}$ and an occlusion map $occ_{pose}$.

15. The one or more non-transitory machine-readable information storage mediums of claim 11, wherein the image generation network generates emotional talking head video for the identity image by combining the image inpainting regions of the head pose $in_{pose}$ and the disentangled expression inpainting feature map $in_{exp}$.

System 100

Hardware Processor(s) 104

I/O Interface(s) 106

Memory 102

Database 108

Modules 110

**FIG.1**

**Input Identity image $I_{id}$**

**Input Speech S**

**Input Emotion e**

Expression Generation Network $G_{exp}$ **204**

Neutral Landmark **204c**

Graph Encoder **204d**

Second Emotion encoder **204b**

Second Audio encoder **204a**

Graph Decoder **204e**

Expression Landmarks $L_{exp}$ (fixed frontal pose)

First audio encoder **202a**

First Emotion encoder **202b**

Conditional VAE-LSTM

Pose encoder $p_t$

Pose Generation Network $G_{pose}$ **202**

Pose Landmarks $L_{pose}$ (fixed neutral expression)

Image Generation Network $G_{image}$ **206**

First Transformer

Expression-driven motion generator

Inpainting

*Expression Flow Branch* **206a**

Second Transformer

pose-driven motion generator

Inpainting

*Pose Flow Branch* **206b 06b**

Compose

Output Generated video $I_{exp +pose}$

**FIG.2**

18

300

receive a plurality of inputs comprising an identity image, a speech audio input data, and an emotion input data

302

generate by a pose generation network based on conditional VAE-LSTM, a sequence of emotion-controllable diverse head pose movements using one or more pose landmarks in neutral expression for the plurality of inputs

304

generate by an expression generation network based on graph convolution, one or more expression landmarks in fixed frontal pose for the plurality of inputs

306

generate by an image generation network for the identity image, an emotional talking head video using disentangled optical flow computation for pose-guided and expression-guided motion using the one or more expression-invariant pose landmarks and pose-invariant emotion landmarks

308

**FIG.3**

202

During
Training

Reference
Pose $p_0$

Reference
Pose Encoder
202c

Encoder
LSTM
202e

$\mu$
$\sigma$

sample

$z$

$= \mu + \sigma * \varepsilon$

Decoder
LSTM 202f

$\delta\widehat{p}_t$

Output
Emotion
s

Ground
truth pose
$p_t$

Pose
Encoder
202d

Deep
speech

First
audio
encoder
202a

Happy
emotion

High
Intensity

First
emotion
encoder
202b

FIG. 4

**FIG.5**

**FIG.6A**

**FIG.6B**

**FIG.7**

**FIG.8**

**FIG.9**

Europäisches
Patentamt
European
Patent Office
Office européen
des brevets

# EUROPEAN SEARCH REPORT

**Application Number**

EP 25 22 2887

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GURURANI SIDDHARTH ET AL: "SPACE: Speech-driven Portrait Animation with Controllable Expression", 2023 IEEE/CVF INTERNATIONAL CONFERENCE ON COMPUTER VISION (ICCV), IEEE, 1 October 2023 (2023-10-01), pages 20857-20866, XP034514299, DOI: 10.1109/ICCV51070.2023.01912 [retrieved on 2024-01-15] * Title; figure 2 * | 1-15 | INV. G06V10/82 G06V40/16 |
| A | SANJANA SINHA ET AL: "Emotion-Controllable Generalized Talking Face Generation", ARXIV.ORG, CORNELL UNIVERSITY LIBRARY, 201 OLIN LIBRARY CORNELL UNIVERSITY ITHACA, NY 14853, 2 May 2022 (2022-05-02), XP091220046, | 1-15 | |
| A | YUAN GAN ET AL: "Efficient Emotional Adaptation for Audio-Driven Talking-Head Generation", ARXIV.ORG, CORNELL UNIVERSITY LIBRARY, 201 OLIN LIBRARY CORNELL UNIVERSITY ITHACA, NY 14853, 12 October 2023 (2023-10-12), XP091633545, * figures 1,2 * | 1-15 | **TECHNICAL FIELDS SEARCHED (IPC)** G06V |

The present search report has been drawn up for all claims

| Place of search | Date of completion of the search | Examiner |
|---|---|---|
| The Hague | 10 February 2026 | Meier, Ueli |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202521007834